# EUROPEAN PATENT APPLICATION

(11) **EP 4 451 304 A1**
(43) Date of publication of application: **23.10.2024**
(21) Application number: 24000038.0
(22) Date of filing: 28.03.2024
(51) Int. Cl.: H01H 27/00, F16P 3/08

(54) **SAFETY SWITCH FOR GUARDING ACCESSES, RELATED ASSEMBLY AND ASSEMBLY METHOD**

(30) Priority: 18.04.2023 IT 202300007557
(71) Applicant: Pizzato Elettrica S.r.l., 36063 Marostica (Vicenza) (IT)
(72) Inventor: Pizzato, Marco, 36063 Marostica (VI) (IT); Zonta, Simone, 36061 Bassano del Grappa (VI) (IT)
(74) Representative: Dalla Rosa, Silvia

(57) **Abstract**

A safety switch for guarding access to industrial machines or plants comprises a case (4) housing switching means suitable for being connected to one or more power and/or service circuits of the machine or plant for their opening and/or closing upon interaction with an actuating device (2), a locking/unlocking mechanism (5) of the actuating device (2) housed in the case (4) and provided with a movable locking/unlocking pin (6) along a longitudinal direction (X) to protrude at least partially with one of its ends (7) from the case (4), a head (9) fixed to the case (4) and configured to allow the interaction of the locking/unlocking pin (6) with the actuating device (2), mutual coupling means (12, 13) between the case (4) and the head (9) suitable to allow their mutual stable fixing by relative sliding along at least one sliding direction (Y) transverse to the longitudinal direction (X).

## Description

### Technical Field

The present invention finds application in the field of electrical devices for industrial use, in particular for the control of industrial machines and plants, and particularly has as its object a safety switch designed, for example, for guarding accesses to safety perimeters or to dangerous areas of industrial machines or plants.

The invention also relates with a safety assembly for the protection of accesses which comprises the above safety switch and an actuating device suitable to cooperate therewith upon the opening/closing of the access and its locking/unlocking.

A further object of the invention is a method for assembling the above safety switch.

### State of the art

As known, safety assemblies for the control of industrial machines and plants generally comprise a first device operating ad a safety switch for switching the power and/or service circuits of the machine or plant, or parts thereof, and adapted to cooperate with an actuator device with driving function and which interacts with the first device to generate a command for switching the above circuits.

For safety assemblies designed to monitor the access to safety perimeters or working areas of industrial machines or plants, the switching device is usually applied to a fixed part of the protection close to the access.

The actuator device is instead generally applied directly to the movable part of the access, so that the interaction with the switching device takes place when the access is closed, according to operating schemes that can vary according to multiple schemes. A particular kind of these assemblies is represented by assemblies provided with electronically operated switches, wherein the safety switch is provided with a first communication element, usually an antenna, suitable to communicate with a second communication element, such as a transponder, associated with the movable element, for example the actuator device or an element of the machine to be detected, to receive a coded presence signal suitable for indicating the proximity of the movable element. Generally speaking, safety switches comprise a main module provided with a case housing thereinside both the mechanical or electronic switching elements, with the relative connection terminals for the connection of the circuits to be controlled, and, for safety switches for access control, also a mechanism for locking the actuator device, i.e. a mechanism suitable for engaging the actuator device to prevent the unsafe opening of the access.

The safety switch is then completed by one or more functional modules, among which there is generally a head designed to allow interaction between the actuator device and its locking mechanism.

In the case of electronically operated switches, the head may also house the antenna or other suitable remote communication element.

Some safety switches have a relatively complex configuration, with the head constituting a module distinct from the case and separable therefrom, generally also with the possibility of being oriented according to multiple mutually rotated positions. These solutions require that both the case of the main module and the head have adequate mechanical resistance; to this end, various known solutions require these components to be made of metal.

DE102021105328 describes a safety switch having a main module provided with the case and an upper head suitable for being fixed from above on the main module by means of a shaped protrusion which snugly fits in a recess present on the top face of the case.

Additionally, in such configurations there are usually connecting screws to secure the head to the case. The connecting screws pass through the head along the longitudinal development direction of the switch and are screwed to the case. Portions of the case dedicated only to receiving and coupling with the connection screws are required, consequently increasing the overall size of the safety switch.

In safety switches with a simpler configuration, the head can be monolithic with the main module, so as to create a compact element.

Fixing the device to the protection is usually carried out using screws or fixing pins inserted into special holes made directly in the case of the main module.

As a consequence, to guarantee sufficient resistance against the mechanical forces transmitted by the connecting members to the case, the latter must have adequate resistance and, therefore, is generally made of metal or high-resistance polymeric material, with a consequent increase in costs which may represent a limit in the use of the device.

Furthermore, the need to insert the fixing screws into the case, also considering the presence of the locking mechanism, entails the need to increase the overall size of the device, both longitudinally and transversally, with related complications in its fixing as it will be necessary to have a fixing structure of adequate dimensions.

This condition is particularly problematic in those industrial machines wherein a too bulky safety switch could interfere with the correct closing of the access, making the machine potentially dangerous for the operator.

### Scope of the invention

The object of the present invention is to overcome the above-mentioned drawbacks by creating a safety switch for guarding access to industrial machines or plants which has features of high efficiency and relative cost-effectiveness.

A particular object is to provide a safety switch for guarding accesses to industrial machines or plants which has a relatively compact configuration but which at the same time guarantees adequate safety standards.

Yet another particular object is to provide a safety switch for guarding accesses to industrial machines or plants which has relatively small size, always guaranteeing adequate stability in its fixing.

A further object is to provide a safety switch for guarding accesses to industrial machines or plants which is economical and has relatively small dimensions, always guaranteeing high resistance to the efforts to which it is subjected during its use. These objects, as well as others which will become more apparent hereinafter, are achieved by a safety switch for guarding accesses to industrial machines or plants which, according to claim 1, comprises a case housing switching means suitable for being connected to control means for controlling the machine or plant for the opening and/or closing thereof upon the interaction with the actuating device, a locking/unlocking mechanism of the actuator housed in said case and provided with a locking/unlocking pin movable along a longitudinal direction to protrude at least partially with one end thereof from said case, a head fastened to said case and adapted to allow the interaction of said locking/unlocking pin with the actuating device and wherein said head and said case comprise respective means for mutual coupling suitable to allow stable fixing by reciprocal sliding along at least one sliding direction transverse to said longitudinal direction, preferably orthogonal to said longitudinal direction.

Fixing by sliding the head to the case will make it possible to apply simpler solutions for anchoring the entire switch to the supporting structure and which will allow for relatively small overall dimensions and/or the use of less resistant and therefore more economical materials for those parts of the switch not designed to withstand high forces.

As matter of fact, the peculiar sliding coupling will allow the head to be fixed to the case, even if not necessarily in a completely stable manner, without having to provide for the use of additional fixing means such as the classic through screws that are inserted into corresponding holes that extend longitudinally both along the head and along the case.

It should be noted that here and below the expression sliding coupling between head and housing also comprises configurations wherein only a part of the head is slidably coupled with the case.

In particular, the head may comprise a retaining body integral with said case and a removable portion which can be coupled by transversal sliding with said retaining body.

The retaining body may be shaped to define a constraint for said removable portion with said case at least along said longitudinal direction and possibly also along said transversal sliding direction.

Furthermore, the retaining body may be monolithic with said case and both it and the case may be made of plastic material, with only the removable portion of said head which will be made of metallic material, so as to create a lighter and more economical switch but without reducing its overall resistance.

However, it is understood that the head may also be entirely made of metallic material or entirely made of plastic material, including the removable portion, or the removable portion may be made of plastic material with high mechanical performance.

In fact, the switch may advantageously be provided with stable anchoring means to a fixed or movable part of the access associated exclusively with the removable portion of said head.

In this way, it will also be possible to reduce the dimensions of the case, as it will not be necessary to have an increased width for the case usually necessary in similar switches according to the state of the art to provide both the holes for anchoring the switch to the frame and the above holes for fixing the head to the case.

According to a further advantageous aspect of the invention, a safety assembly is provided for guarding an access to industrial machines or plants which, in accordance with claim 16, comprises a safety switch according to the invention and an actuating device suitable to interact with said safety switch upon the closing/opening of the access for the opening/closing of one or more of the power and/or service circuits of the machine or plant.

According to yet a further advantageous aspect of the invention, a method is provided for assembling the above safety switch which, according to claim 18, provides for a coupling step between said case and said head by means of sliding of said head with respect to said case along said sliding direction, so as to guarantee rapid pre-assembly of the two main parts of the switch and which will allow the fixing of the switch in a stable configuration through the use of the front anchoring means associated with the head.

Advantageous embodiments of the invention are obtained in accordance with the dependent claims.

### Brief disclosure of the drawings

Further features and advantages of the invention will become more apparent in light of the detailed description of preferred but not exclusive embodiments of the safety switch and of an assembly comprising such a switch, shown by way of non-limiting example with the aid of the attached drawing tables wherein:
**FIG. 1** is an exploded and simplified side view of the switch;
**FIG. 2** is a front view of the assembled switch of Fig. 1;
**FIG. 3** is a perspective view of the assembly provided with the switch according to the invention and with the actuating device not inserted;
**FIG. 4** is an assembled perspective view of the switch of Fig. 3;
**FIG. 5** is an exploded perspective view of the switch of Fig. 4;
**FIG. 6** is a front view of the switch of Fig. 4;
**FIG. 7** is a rear view of the switch of Fig. 4;
**FIG. 8** is a side sectional view of the switch of Fig. 3;
**FIG. 9** is a front sectional view of the switch of Fig. 3 according to the line A-A of Fig. 8;

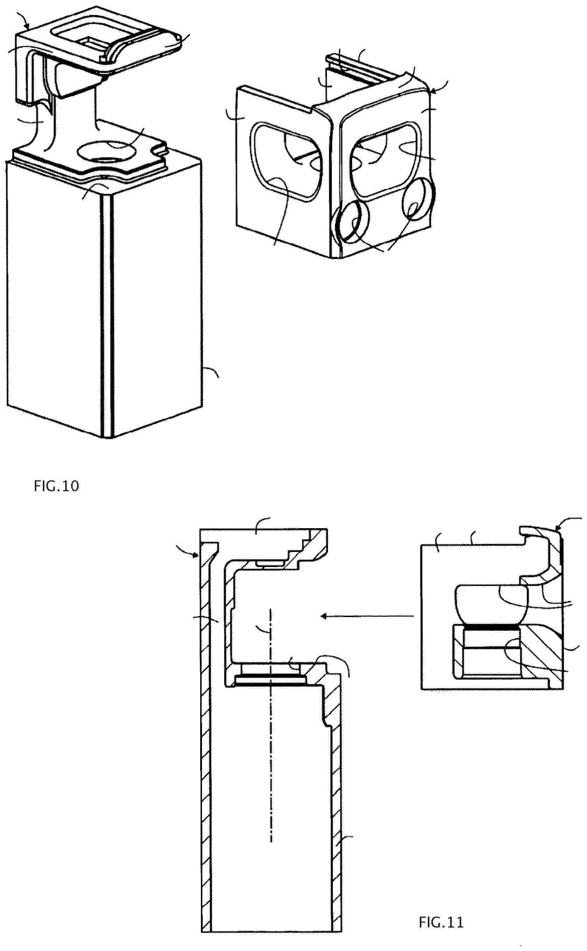

**FIG. 10** is a perspective view of a detail of the switch of Fig. 3 which illustrates the case and the head without the top element in an unassembled condition;
**FIG. 11** is a side sectional view of the detail of Fig. 10 in the unassembled condition;

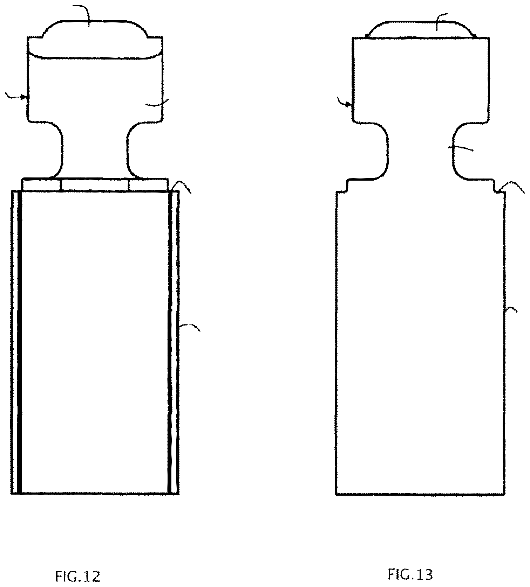

**FIG. 12** is a front view of an element of the detail of Fig. 10;
**FIG. 13** is a rear view of the element of Fig. 12;
**FIG. 14** is a sectional side view of the assembly of Fig. 3 wherein the actuating device is inserted into the switch.

### Best modes of carrying out the invention

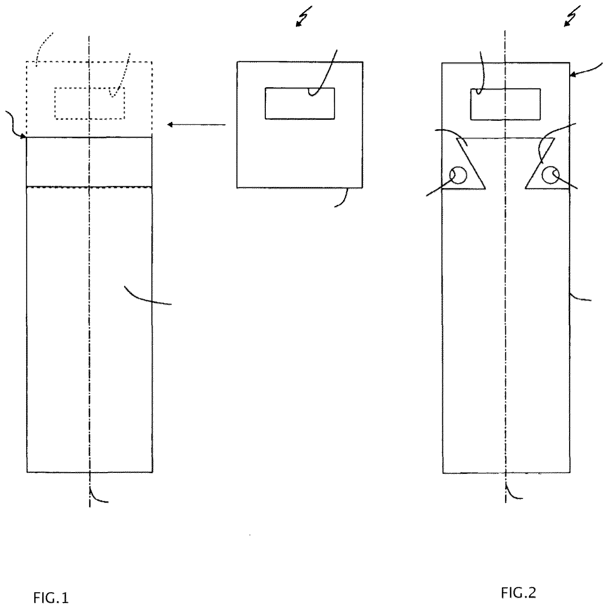

**Figs. 1 and 2** schematically show a simplified configuration of a safety switch, globally referred as **1,** for guarding accesses to industrial machines and plants.

In particular, the switch as shown is designed to be fixed to a fixed or movable part of a perimeter, panel or safety barrier close to an access to a working area of an industrial machine or plant, to guarding this access.

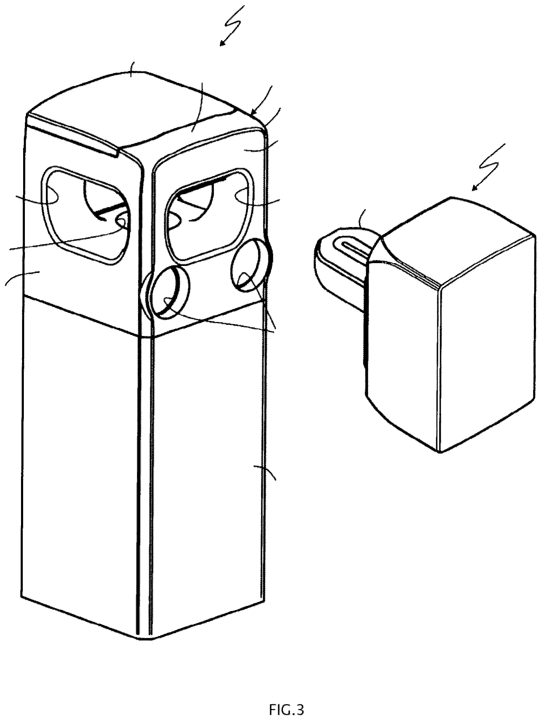

In a known manner, the safety switch **1** is designed to be mounted close to the access to be monitored to interact with an actuating device, an example of which is shown in **Fig. 3** and generally referred as **2,** upon the opening/closing or unlocking of the access, as described in more detail here below.

For example, the safety switch **1** may be fixed to the fixed part of an access, such as the frame of a door, while the actuating device **2** may be fixed to the movable part of the access, or vice versa.

In its most essential configuration, the safety switch **1** comprises a case **4** housing switching means suitable for being connected to the control means of the machine or plant, such as one or more power and/or service circuits and/or to safety control devices of the machine, such as safety modules or PLCs, depending on the type of switching means adopted. The switching means are designed to signal the status of the access monitored by the safety switch **1,** for example the switching means are designed to signal whether the access is open or closed or closed and locked.

The switching means, not shown as known per se, may comprise one or more pairs of mutually movable contacts, or relays, including safety relays, suitable for opening and closing respective circuits following the reception of specific commands and/or signals, according to known schemes not described here as they do not limit the present invention.

Alternatively, or in addition, the switching means may be of the electronic type, in particular of the OSSD (Output Signal Switching Device) type and comprise semiconductor devices or one or more transistors, to be connected to the above safety modules or PLCs.

Furthermore, alternatively or in combination with the OSSD outputs, safe or non-safe communication systems via BUS or radio frequency or any other known communication system may be present.

The case **4** also houses a locking/unlocking mechanism **5,** described in more detail below but whose configuration is not to be understood as limiting the present invention, whose main task will be to lock the actuating device **2** to the safety switch **1.**

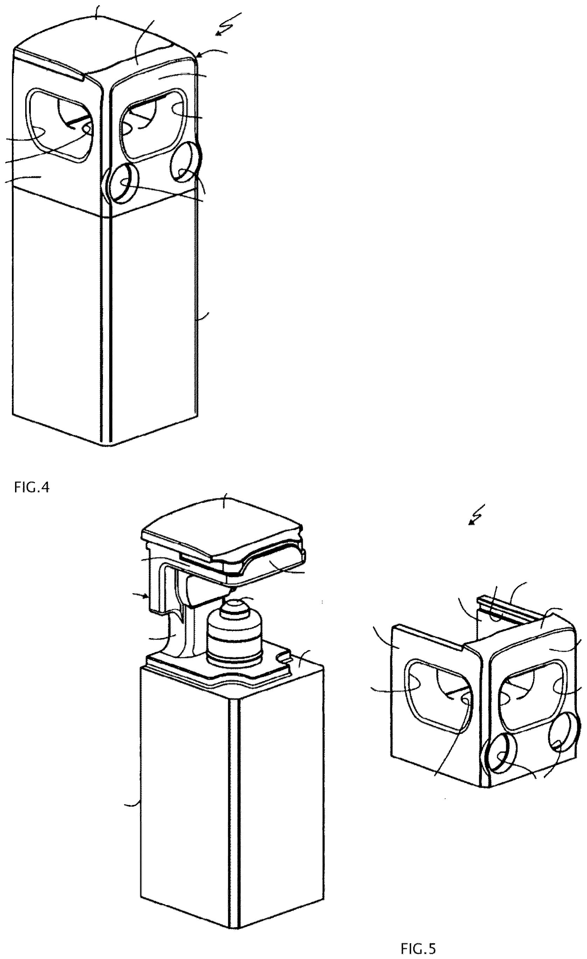

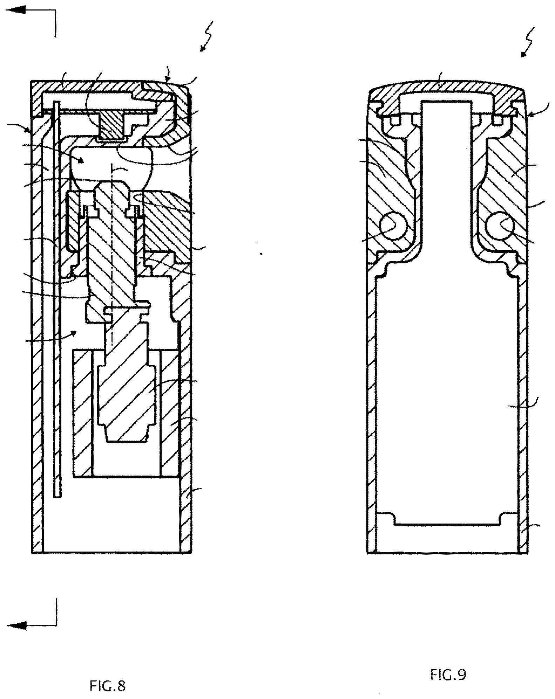

In particular, the locking/unlocking mechanism **5** is provided with a locking/unlocking pin **6** movable in the case **4** along a longitudinal direction **X** to protrude at least partially with an upper end **7** thereof outside to the case **4,** as shown in **Fig. 5****,** the case **4** having for this purpose an upper passage **8,** shown in **Fig. 8****.**

The safety switch **1** is also provided with a head **9** fixed above the case **4** and which is designed to allow the interaction of the locking/unlocking pin **6** with the actuating device **2.**

In particular, the head **9** may be provided with one or more slots **10** suitable to allow the interaction of the locking/unlocking pin 6 with an actuating pin **11** protruding from the actuating device **2.**

In particular, the slots **10** will allow the actuating pin **11** to enter at least partially into the head **9** to be locked with respect to the safety switch **1** following the retention action of the locking/unlocking pin **6.**

The actuating pin **11** may have retention and centering function or even an actuator function, depending on the type of actuator device.

However, it will also be possible to provide solutions wherein the head **9** has no slots or similar elements, if the actuating device **2** is not provided with an actuating pin or other mechanical or electromechanical actuator, as for example in some solutions of switches with totally electronic operation like the one disclosed in WO2015/155744 in the name of the same Applicant.

In these cases, the safety switch **1** may also be devoid of the locking/unlocking mechanism **5.**

Optionally, the safety switch **1** may be implemented with further auxiliary modules, such as, for example, modules equipped with emergency controls, manual release, connection modules, even of different types to allow the connection with different types of cable, or other types of modules according to configurations all typical for this kind of product.

These auxiliary modules may be fixed and integrated with the case **4** or they may be anchored thereto in a removable and/or orientable manner.

The head **9** and the case **4** are mutually coupled by respective mutual coupling means suitable to allow their mutual stable fixing by mutual sliding along at least one sliding direction **Y** transverse to the longitudinal direction **X.**

Generally speaking, the mutual coupling means will comprise a first coupling element **12** integral with the case **4** and a second coupling element **13** integral with the head **9,** with the two coupling elements **12, 13** both comprising mutually counter-shaped coupling portions to allow their coupling by sliding along the sliding direction **Y**.

In the exemplary embodiment of **Figs. 1** and **2** the two coupling elements **12, 13** are shaped to define a dovetail coupling.

Preferably the sliding direction **Y** will be orthogonal to the longitudinal direction **X,** as schematized in **Fig. 1****.**

Even more preferably, the sliding direction **Y** corresponds with a direction of insertion, in use, of the actuating pin **11** inside the head **9** and through one of the slots **10.**

In the preferred configuration of the figures, as can be seen more clearly from **Fig. 5****,** the mutual coupling means comprise a retaining body **12** integral with the case **4** and which will define the first coupling element.

The head **9** will instead be provided with a removable portion **13** defining the second coupling element and which will be adapted to be coupled to the retaining body **12** by transversal sliding along the sliding direction **Y.**

The retaining body **12** will be suitably shaped to define a constraint for the removable portion **13** of the head **9** with respect to the case **4** at least along the longitudinal direction **X,** in both senses along the same.

In other words, the retaining body **12** limits, or more preferably blocks, the mutual sliding between head **9** and case **4** along the longitudinal direction **X** in both senses.

Even more preferably, the retaining body **12** will be suitably shaped to define a constraint for the head **9** with respect to the case **4** also along the sliding direction **Y,** limiting, or more preferably blocking, the mutual sliding between the head **9** and the case **4** along the sliding direction **Y,** in at least one sense.

Even more preferably, the retaining body **12** will be suitably shaped to define a constraint for the head **9** with respect to the case **4** also along a direction perpendicular to the longitudinal direction **X** and to the sliding direction **Y.**

In the preferred embodiments, the retaining body **12** will be suitably L-shaped, i.e. with a longitudinal arm **14** extending from the upper face **15** of the case **4,** i.e. the one provided with the upper passage **8** for the locking/unlocking pin **6,** and a transverse arm **16** cantilevered from the upper end of the longitudinal arm **14.** Optionally, the transverse arm **16** comprises a cover cap **41.**

In the preferred embodiments, the transverse arm **16** extends, with respect to the longitudinal direction **X,** close to the level of the upper end **40** of the removable portion **13.** In particular the transverse arm **16** covers, completely or partially, or is coplanar with the upper end **40** of the removable portion **13.** In this way the removable portion **13** is predominantly interposed between the upper face **15** of the case **4** and the transverse arm **16** which, therefore, prevent the movement of the removable portion **13** along the longitudinal direction **X.**

In turn, the removable portion **13** of the head **9** will be shaped to surround the retaining body **12** on at least three sides and define with it a head **9** with a substantially prismatic shape, for example approximately in the shape of a cube or parallelepiped as in the figures.

In particular, the removable portion **13** will have a front face **17** and a pair of side faces **18, 19,** on at least one, preferably at least two, of which a slot **10** will be made for the insertion of the actuating pin **11.**

For example, in the embodiment shown in **Fig. 3** both the front face **17** and the two side faces **18, 19** are provided with a respective slot **10.**

The retaining body **12** and the removable portion **13** comprise respective coupling portions with mating shape designed to define a shape coupling therebetween.

In this example, the transverse arm **16** will be provided of transversal sliding guides **20** adapted for sliding engage respective transversal sliding counter-guides **21** made on each of the two side faces **18, 19.**

It is understood that the sliding coupling between the removable portion **13** and the retaining body **12** may also be obtained with different coupling systems, for example with joints or other couplings of the male and female type, without particular limitations.

The head **9** will also be shaped to allow the insertion and consequent longitudinal movement therewithin of the protruding end **7** of the locking/unlocking pin **6,** so as to allow its interaction with the actuating pin **11.**

According to a further particularly advantageous aspect, in a preferred but not exclusive embodiment, the retaining body **12** will be monolithic with the case **4** and possibly made of one piece therewith and in the same material.

By way of example, the retaining body **12** will be monolithic with the case **4,** for example by means of a single mechanical processing operation, such as moulding.

Optionally, it will be possible to manufacture the case **4** and the retention body **12** in plastic material, while the removable portion **13** of the head **9** may be made in metallic material or even in plastic material with high mechanical performance to guarantee adequate resistance to interactions with the actuating device **2** and to efficiently withstand the stresses transmitted both by the actuating device **2** and by the constraint produced by the anchoring means to the fixed frame of the protection or to another fixed or movable part of the access.

This shape makes the safety switch **1** light and economical but at the same time resistant.

In particular, the above stable anchoring means of the safety switch **1** may be associated exclusively with the head **9,** and even more preferably only with the removable portion **13.**

For example, the anchoring means will comprise one or more anchoring through holes **22,** for example a pair of anchoring through holes **22,** which extend parallel to each other along a direction transverse to the longitudinal direction **X.**

Preferably, the through anchoring holes **22** will extend along a direction parallel to the sliding direction **Y** or orthogonal thereto and also to the longitudinal direction **X.** The anchoring through holes **22** will be made in at least one between the front face **17** and the side faces **18, 19** of the removable portion **13** of the head **9,** for example on the front face **17** as in the figures, and laterally to the longitudinal arm **14.**

Optionally, the anchoring through holes **22** may be closed by respective anti-tampering caps, i.e. plugs configured to break once removed to give evidence of a possible tampering or other intervention on the anchoring members present inside the anchoring through holes **22.**

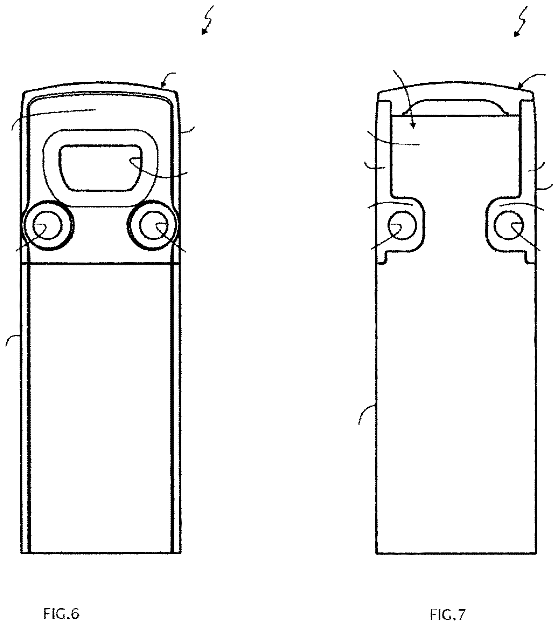

As visible from **Fig. 7****,** the removable portion **13** will also be provided with a pair of rear appendages **23** which will be arranged, upon complete assembly, in a coplanar position with the longitudinal arm **14** and which will have respective outlets of the through anchoring holes **22**.

This particular embodiment of the anchoring means will also allow the head **9** to be stably locked with respect to the case **4** at the same time as the entire safety switch **1** is fixed to the access, without resorting to further fixing means between the head **9** and the case **4.**

In these cases the coupling between the head **9** and the case **4** may be of a completely removable type, obviously in the event that the safety switch **1** is not fixed in position by the anchoring means.

Alternatively, the mutual coupling means may comprise constraint elements suitable for making the coupling between head **9** and case **4** completely blocked or only partially modifiable.

For example, the constraint elements can only partially block the coupling between head **9** and case **4** to make the head **9** orientable with respect to the case **4** but still constraining the former with respect to the latter along the transversal sliding direction **Y.**

Preferably, the constraint elements may be adapted to completely block the movement of the head **9** with respect of the case **4** or to limit it to a predetermined maximum stroke, avoiding complete detachment.

This configuration will have the purpose of preventing the user from dismantling the safety switch **1.**

In a preferred configuration, visible in **Fig. 8****,** the constraint elements comprise an anchoring bush **24** coaxial with the locking/unlocking pin **6** and which will be inserted into the longitudinal passage **25** of the removable portion **13.** The anchoring bush **24** is suitable to define a constraint between the removable portion **13** and the case **4** along the transverse sliding direction **Y.**

According to a first variant, the safety switch **1** may be of the electronically operated type and it will be designed to communicate with the actuating device **2** by exchanging an electronic presence signal, preferably of the coded type.

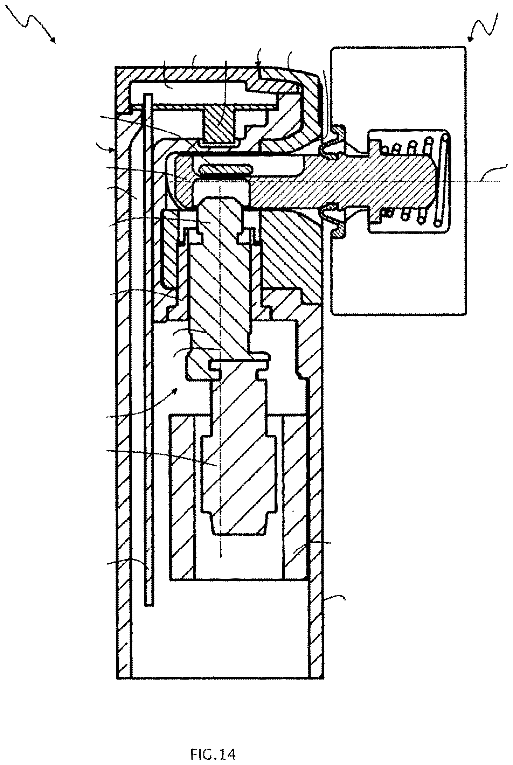

**Fig. 14** shows an electronically operated safety assembly wherein the safety switch **1** is provided with a first communication element **26** of the receiving or transmitting type and the actuating device **2** is provided with a second communication element **27** of the transmitting or receiving type.

Generally, the receiving element will be an RFID (Radio Frequency Identification) type antenna or reader designed to communicate with the transmitting element, which may instead be a transponder, when the latter is at the minimum detectable distance from the antenna or reader.

In the example of **Fig. 14****,** the first communication element **26** is a receiving element, for example of the RFID type, and the second communication element **27** is a transmitting element, such as a transponder.

In particular, the RFID type receiving element will emit a signal capable of exciting the transponder, which is in turn equipped with an RFID tag with identification code, which in turn will emit a response signal which will be received by the receiving element and which has to be recognized by the control means of the safety assembly, appropriately equipped with a CPU, in order to allow the machine or plant to be started. Code recognition can be unique or generic, depending on whether you want to create a safety switch with a high or low coding level in accordance with the EN ISO 14119 standard.

Advantageously, the transponder will be coded so that it can be uniquely recognized by the receiving element, preventing the use of actuating devices other than the one connected to the access, avoiding the risk of unsafe opening of the access.

From the same section it is also possible to observe a possible configuration of the locking/unlocking mechanism **5,** provided with an electromagnet **28** capable of being energized/deactivated to promote the longitudinal translation, in one or the other sense, of a pusher **29** mechanically connected to the locking/unlocking pin **6.** Consequently, the locking/unlocking pin **6** will move along the longitudinal direction **X,** according to methods known in the field and therefore not disclosed in larger detail. Briefly, following the energization or de-energization of the electromagnet **28,** the locking/unlocking pin **6** may translate in a first sense along the longitudinal direction **X** so that its upper end 7 fits into the seat **30** provided in the head **9** and designed to accommodate the actuating pin **11,** blocking the latter with respect to the head **9.** Alternatively, the locking/unlocking pin **6** may translate in the opposite sense always along the longitudinal direction **X** to remove the upper end **7** from the seat **30,** so as to allow the extraction of the actuating pin 11 and the unlocking of the access.

The electromagnet **28** may be replaced in a completely equivalent manner by another electromechanical, electric, hydraulic or pneumatic actuator means housed in the case **4.**

The first communication element **26** may advantageously be housed inside the transversal arm **16** of the retaining body **12,** to face the protruding upper end **7** of the locking/unlocking pin **6** and detecting the presence of the second communication element **27,** if inserted into the seat **30** of the head **9.**

Conveniently, the second communication element **27** will be inserted into the actuating pin **11** which enters into the seat **30** of the head **9.**

However, it is understood that the transmitting element may also be of another type, such as an actuator operating using magnetic or electromagnetic, optical, mechanical, induction, pressure or other types of sensors and consequently the receiving element will adapt to the nature of the transmitting element.

According to a variant not illustrated, the safety switch may be of the electromechanically operated type for interacting with an actuation device equipped with a key actuator in place of the retention and centering pin, according to known methods described for example in EP0871188.

The electrically or electromechanically operated safety switch **1** will also be provided with a PCB (Printed Circuit Board) **31** housed in the case **4** and on which there will be both a control and communication unit and the switching means.

By way of example, the control unit may comprise one or more safety CPUs (Central Processing Units) which communicate with each other in a redundant manner and which will both communicate with the first communication element **26.** Furthermore, the locking/unlocking mechanism **5** may be equipped with sensors suitable of detecting the locked position of the locking/unlocking pin **6** and which communicate with the control unit.

By way of example, the control unit is designed to control the switching means based on the signals transmitted by the first communication element **26** and by the sensors of the locking/unlocking mechanism **5.**

Optionally, PCB **31** may also comprise electrical and electronic circuits for communication of the control unit and of the switching means with external command and control systems, such as for example communication BUS of the safe type (Profisafe, IOlink safety, CIP Safety and similar) and non-safe type (Profinet, IOlink, EtherNet/TP, Profmet and similar) and for the management of the various components, including any LED lights or other signaling elements.

According to a further particularly advantageous aspect, PCB **31** will extend longitudinally inside the case **4** and also in the longitudinal arm **14** of the retaining body **12,** to connect directly to the first communication element **26** housed in the transverse arm **16.**

This configuration will allow for a particularly compact structure, with a reduction in the overall height of the safety switch **1.**

The switch according to the present invention will be suitable for use within a safety system for the control of a machine or plant and which comprises one or more safety switches associated with respective accesses to be monitored, which are not necessarily identical to each other nor all in accordance with the present invention, and suitable for interacting with respective actuating devices. The system may also comprise one or more safety modules or PLCs designed to manage the power supply of the machine or plant on the basis of the signals exchanged with safety switch 1 and allow its safe operation.

## Claims

1. A safety switch for controlling accesses to industrial machines or plants suitable for being mounted close to an access to interact with an actuating device **(2)** at the opening/closing or unlocking of the access, which safety switch comprises:
- a case **(4)** housing switching means adapted to be connected to control means of the machine or plant for opening and/or closing the same upon interaction with the actuating device **(2);**
- a locking/unlocking mechanism **(5)** of the actuating device **(2)** housed in said case **(4)** and provided with a locking/unlocking pin **(6)** movable along a longitudinal direction **(X)** to project at least partially with an end **(7)** from said case **(4);**
- a head **(9)** fastened to said case **(4)** and suitable to allow the interaction of said locking/unlocking pin **(6)** with the actuator device **(2);**
**characterized by** comprising coupling means **(12, 13)** for reciprocal coupling between said case **(4)** and said head **(9),** said coupling means **(12, 13)** being adapted to allow said case **(4)** and said head **(9)** to be mutually fixed by relative sliding along at least one sliding direction **(Y)** transverse to said longitudinal direction **(X).**

2. Safety switch as claimed in claim 1, **characterized in that** said sliding direction **(Y)** is orthogonal to said longitudinal direction **(X).**

3. Safety switch as claimed in claim 1 or 2, **characterized in that** said coupling means **(12, 13)** comprise a first coupling element **(12)** integral with said case **(4)** and a second coupling element **(13)** integral with said head **(9),** said coupling elements having respective portions complementarily shaped with each other to define a constraint between said case **(4)** and said head **(9)** at least along said longitudinal direction **(X).**

4. Safety switch as claimed in claim 3, **characterized in that** said head **(9)** comprises a retention body defining said first coupling element **(12)** integral with said case **(4)** and a removable portion defining said second coupling element **(13)** and suitable to be coupled by sliding along said sliding direction **(Y)** with said retention body **(12).**

5. Safety switch as claimed in claim 4, **characterized in that** said retention body **(12)** is shaped to define a constraint for said removable portion **(13)** on said case **(4)** at least along said longitudinal direction **(X).**

6. Safety switch as claimed in claim 5, **characterized in that** said holding body **(12)** is shaped to define at least one constraint for said removable portion **(13)** on said case **(4)** also along said sliding direction **(Y).**

7. Safety switch as claimed in any claim from 4 to 6, **characterized in that** said holding body **(12)** is monolithic with said case **(4).**

8. Safety switch as claimed in claim 7, **characterized in that** said retention body **(12)** and said case **(4)** are made of plastic material and said removable portion **(13)** of said head **(9)** is made of a metal.

9. Safety switch as claimed in any claim 4 to 8, **characterized in that** said retention body **(12)** is L-shaped with a longitudinal arm **(14)** extending from said case **(4)** and a transverse arm **(16)** cantilevered from said longitudinal arm **(14)** and provided with transversal sliding guides **(20)** for said removable portion **(13).**

10. Safety switch as claimed in claim 9, **characterized in that** said removable portion **(13)** of said head **(9)** comprises one or more sliding counter-guides **(21)** adapted to engage a respective one of said transversal sliding guides **(20).**

11. Safety switch as claimed in claim 10, **characterized in that** said head **(9)** is shaped to allow longitudinal movement at its inside of said projecting end **(7)** of said locking/unlocking pin **(6)** and comprises a front face **(17)** and a pair of side faces **(18, 19),** at least one between said front face **(17)** and said side faces **(18, 19)** being provided with a slot **(10)** for the passage of an actuating pin **(11)** of the actuating device **(2)** and the interaction thereof with said end **(7)** of said locking/unlocking pin **(6)** when the access is closed.

12. Safety switch as claimed in any claim 4 to 11, **characterized by** comprising anchoring means **(22)** for the firm anchoring to a fixed or movable part of the access arranged exclusively on said removable portion **(13).**

13. Safety switch as claimed in claim 12, **characterized in that** said anchoring means comprise a pair of passing-through holes **(22)** which run parallel to said sliding direction **(Y),** laterally and on opposite sides with respect to said longitudinal direction **(X).**

14. Safety switch as claimed in claims 9 and 12, **characterized in that** said passing-through holes **(22)** are made in at least one between said front face **(17)** and said side faces **(18, 19)** of said removable portion **(13)** and laterally to said longitudinal arm **(14).**

15. Safety switch as claimed in any claim from 9 to 14, **characterized in that** said transverse arm **(16)** faces said end **(7)** of said locking/unlocking pin **(6)** and houses a first communication element **(26)** suitable for detecting the presence of the actuating device **(2).**

16. Safety switch as claimed in any preceding claim, **characterized in that** said coupling means comprise an anchoring bush **(24)** coaxial to said locking/unlocking pin **(6)** and suitable to define a constraint along said sliding direction **(Y)** between said head **(9)** and said case **(4).**

17. A safety assembly for controlling accesses to industrial machines or plants, comprising a safety switch **(1)** according to one or more of the preceding claims adapted to be anchored to one between a fixed part and a movable part of the access to be guarded and an actuating device **(2)** adapted to be anchored to the other between the fixed or movable parts of the access to be guarded and adapted to interact with said safety switch **(1)** upon the closing/opening of the access for opening/closing one or more power and/or service circuits of the machine or plant.

18. Safety assembly as claimed in claim 17, comprising a safety switch **(1)** according to claim 13, **characterized in that** said safety switch **(1)** is adapted to be anchored to one between the fixed and movable parts of the access to be guarded only by said anchoring means.

19. Method for assembling a safety switch according to any claim from 1 to 16, **characterized by** comprising a coupling step between said case **(4)** and said head **(9)** by means of relative sliding of said head **(9)** with respect to said casing **(4)** along said sliding direction **(Y).**
